# DEMANDE DE BREVET EUROPEEN

(11) **EP 1 245 441 A1**
(43) Date de publication de la demande: **02.10.2002**
(21) Numéro de dépôt: 02290785.1
(22) Date de dépôt: 28.03.2002
(51) Int. Cl.: B60Q 1/12

(54) **Projecteur du type elliptique pour véhicule automobile, susceptible d'engendrer plusieurs faisceaux lumineux**

(30) Priorité: 29.03.2001 FR 0104474
(71) Demandeur: VALEO VISION, 93012 Bobigny Cédex (FR)
(72) Inventeur: Albou, Pierre, 93012 Bobigny Cedex (FR)
(74) Mandataire: Kohn, Philippe

(57) **Abrégé**

La présente invention concerne un projecteur pour véhicule automobile, comportant un premier réflecteur (20, 20') de forme elliptique à un premier foyer (F₁) duquel est située une source lumineuse principale (10), les rayons lumineux émis par cette source (10) et réfléchis par le réflecteur elliptique (20, 20') étant dirigés vers une tache de concentration située à un deuxième foyer (F₂) du réflecteur elliptique (20, 20'), les premier (F₁) et deuxième (F₂) foyers du réflecteur elliptique (20, 20') définissant un axe optique principal (Oy) du réflecteur elliptique (20, 20'), une lentille convergente (30) étant disposée de sorte que son axe optique soit confondu avec l'axe optique principal (Oy) du réflecteur elliptique (20, 20') et que le deuxième foyer (F₂) du réflecteur (20, 20') soit situé sur la ligne focale (LF) de la lentille (30) pour émettre un faisceau lumineux de rayons parallèles à l'axe optique principal (Oy).

Selon la présente invention, le projecteur comporte au moins un système optique concentrant les rayons lumineux émis par une deuxième source lumineuse (60) dans la direction d'un deuxième axe optique (O'y') passant par le centre optique (C) de la lentille (30) et sur une deuxième tache de concentration située sur la ligne focale (LF) de la lentille (30), et en ce que les premier (Oy) et deuxième (O'y') axes optiques font entre eux un angle (α) compris entre 20 et 45°.

## Description

La présente invention concerne les systèmes d'éclairage pour véhicules automobiles, ces systèmes fournissant un faisceau d'éclairage amélioré pour illuminer d'autres zones de la route où circule le véhicule que celles qui sont situées dans l'axe longitudinal du véhicule, pour remplir par exemple un fonction virage.

Une fonction virage permet d'éclairer, lorsqu'un véhicule se déplace sur une trajectoire non rectiligne, les portions de la route qui sont destinées à être abordées par le véhicule, qui se trouvent à l'avant et sur le côté de celui-ci, et qui par conséquent ne sont pas éclairées ou le sont mal par les projecteurs de croisement ou de route traditionnels.

Pour émettre un tel faisceau lumineux, il est connu d'assurer la fonction virage en modifiant l'orientation du faisceau d'un projecteur. Une telle solution n'est pas applicable à un faisceau de croisement de type code européen, sur lesquels la rotation du faisceau risquerait d'entraîner des déréglages dans la photométrie du faisceau, qui deviendrait alors incompatible avec la réglementation en vigueur. En outre, dans la perspective d'une évolution prochaine de la réglementation autorisant la rotation du faisceau de croisement, il ne sera alors pas souhaitable d'effectuer des rotations du projecteur principal de trop grande amplitude, en raison de l'encombrement total de ce projecteur.

Une solution réside alors dans le fait de modifier l'orientation du faisceau d'un projecteur additionnel. Divers moyens ont déjà été proposés pour obtenir ce résultat, qui tous font intervenir des composants optiques mobiles en rotation, quand ce n'est pas le projecteur complet qui est entraîné en rotation. Il en résulte une complication mécanique du projecteur et de ses organes de commande de mouvement, ce qui est nuisible à la fiabilité du système ainsi conçu, et ce qui augmente sensiblement le coût d'un tel projecteur de virage.

Une autre solution connue consiste à disposer sur le véhicule un projecteur fixe, dont l'axe optique fait un angle plus ou moins important avec l'axe longitudinal du véhicule, le projecteur droit étant orienté vers la droite du véhicule, et le projecteur gauche vers la gauche. Le faisceau de virage est alors obtenu par l'allumage, progressif ou non, du projecteur situé du côté où le véhicule tourne. Cette solution impose de disposer une paire supplémentaire de projecteurs sur le véhicule, d'où un encombrement important du système d'éclairage du véhicule.

La présente invention se place dans ce contexte et elle a pour but de proposer un projecteur d'éclairage pour véhicule automobile qui puisse éclairer des zones situées en dehors de l'axe longitudinal du véhicule, en respectant la photométrie des faisceaux de croisement et de route, sans nécessiter de projecteur supplémentaire dédié à cet éclairage, et sans nécessiter de pièce mobile.

La présente invention a donc pour objet un projecteur pour véhicule automobile, comportant un premier réflecteur de forme elliptique à un premier foyer duquel est située une source lumineuse principale, les rayons lumineux émis par cette source et réfléchis par le réflecteur elliptique étant dirigés vers une tache de concentration située à un deuxième foyer du réflecteur elliptique, les premier et deuxième foyers du réflecteur elliptique définissant un axe optique principal du réflecteur elliptique, une lentille convergente étant disposée de sorte que son axe optique soit confondu avec l'axe optique principal du réflecteur elliptique et que le deuxième foyer du réflecteur soit situé sur la ligne focale de la lentille pour émettre un faisceau lumineux de rayons parallèles à l'axe optique principal.

Selon la présente invention, le projecteur comporte au moins un système optique concentrant les rayons lumineux émis par une deuxième source lumineuse dans la direction d'un deuxième axe optique passant par le centre optique de la lentille et sur une deuxième tache de concentration située sur la ligne focale de la lentille, et les premier et deuxième axes optiques font entre eux un angle compris entre 20 et 45°.

Selon d'autres caractéristiques avantageuses et non limitatives de l'invention :
- le système optique comporte un réflecteur paraboloïdal associé à un objectif focalisant les rayons lumineux émis par la deuxième source lumineuse et réfléchis par le deuxième réflecteur sur la deuxième tache de concentration ;
- le système optique comporte un deuxième réflecteur elliptique, la deuxième source lumineuse étant disposée sur un premier foyer du deuxième réflecteur, le deuxième foyer du deuxième réflecteur étant situé sur la ligne focale de la lentille, les foyers du deuxième réflecteur étant alignés sur le deuxième axe optique ;
- le premier réflecteur est constitué de deux moitiés d'ellipsoïdes ayant les mêmes foyers et des excentricités différentes.
- la moitié d'ellipsoïde la plus proche du deuxième réflecteur a une excentricité supérieure à celle de la moitié d'ellipsoïde la plus éloignée du deuxième réflecteur ;
- un cache est disposé sur l'axe optique principal au voisinage immédiat de la ligne focale de la lentille pour délimiter une coupure dans le faisceau de rayons lumineux issus de la source lumineuse principale ;
- un cache est disposé sur le deuxième axe optique au voisinage immédiat de la ligne focale de la lentille pour délimiter une coupure dans le faisceau de rayons lumineux parallèles au deuxième axe optique.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente une vue schématique de dessus d'un projecteur gauche de véhicule automobile selon un premier mode de réalisation de la présente invention ;
- La Figure 2 représente une vue schématique de dessus d'un projecteur gauche de véhicule automobile selon un deuxième mode de réalisation de la présente invention ;
- La Figure 3 représente par un ensemble de courbes isocandela l'allure du faisceau engendré par une première région du réflecteur de la Figure 2 ;
- la Figure 4 représente par un ensemble de courbes isocandela l'allure du faisceau engendré par une deuxième région du réflecteur de la Figure 2 ;
- la Figure 5 représente par un ensemble de courbes isocandela l'allure du faisceau engendré par l'ensemble des première et deuxième régions du réflecteur de la Figure 2 ;
- la Figure 6 représente par un ensemble de courbes isocandela l'allure du faisceau engendré lorsque les deux sources lumineuses d'un projecteur selon la présente invention sont allumées simultanément ;
- la Figure 7 représente par un ensemble de courbes isocandela l'allure du faisceau engendré par les deux projecteurs d'un véhicule lorsque ce dernier suit une route rectiligne, et
- la Figure 8 représente par un ensemble de courbes isocandela l'allure du faisceau engendré par les deux projecteurs d'un véhicule lorsque ce dernier est dans une courbe à gauche.

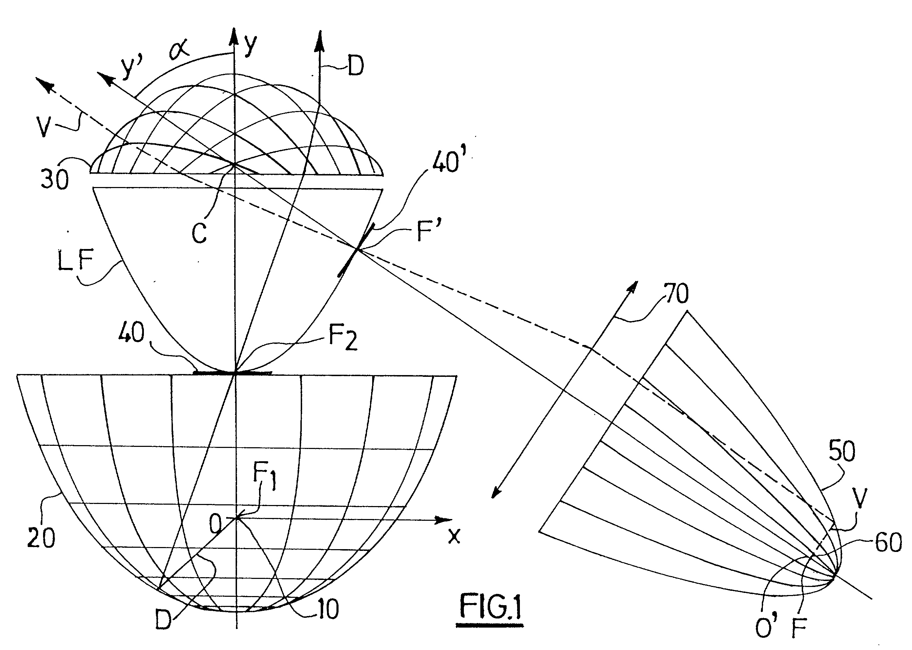

Par convention, on définit trois directions orthogonales Ox, Oy et Oz qui seront utilisées dans la description et sur les Figures, Oy étant la direction générale d'émission du faisceau lumineux de route ou de croisement par le projecteur, et parallèle à l'axe longitudinal du véhicule, Ox étant la direction horizontale perpendiculaire à Oy, et Oz la direction verticale, perpendiculaire à Ox et Oy et au plan de la Figure 1.

Au sommet O de ce trièdre trirectangle est placée une source lumineuse 10, telle que le filament d'une lampe à incandescence normalisée « H1 » ou « H7 », ou encore l'arc électrique d'une lampe à décharge.

Un réflecteur elliptique 20 est disposé de telle sorte que l'un de ses foyers F₁ soit situé sur cette source lumineuse 10. De manière connue, les rayons lumineux issus de la source 10 sont réfléchis par le réflecteur 20 de telle sorte qu'ils se concentrent au deuxième foyer F₂ du réflecteur elliptique 20 pour y former une tache de concentration. Une lentille convergente plan-convexe 30 est disposée de telle sorte que son foyer objet soit superposé au deuxième foyer F₂, de manière à ce que les rayons lumineux reçus par la lentille 30 en ressortent en un faisceau de rayons parallèles entre eux et à l'axe Oy. Pour une meilleure compréhension de la Figure 1, la marche d'un seul de ces rayons lumineux D a été représentée sur cette Figure 1.

L'ensemble source lumineuse 10 - réflecteur 20 - lentille 30 constitue ainsi un projecteur d'éclairage de type elliptique conforme à la technique connue. Si ce projecteur est destiné à former un faisceau de croisement, par exemple de type européen, un cache 40 peut être disposé au voisinage immédiat du deuxième foyer F₂, de manière à former la coupure réglementaire du faisceau de croisement. Pour que le projecteur ainsi conçu puisse également projeter un faisceau de route, il est classique de rendre le cache 40 escamotable dans une position dans laquelle il n'intercepte plus certains des rayons lumineux réfléchis par le réflecteur 20 et passant au dessus du foyer de la lentille.

Conformément à la présente invention, un deuxième réflecteur 50 est prévu pour conférer au projecteur que l'on vient de décrire une fonction de virage. Le deuxième réflecteur 50 est disposé pour fournir, en coopération avec la lentille 30, un faisceau lumineux dans une direction O'y' passant par le centre optique C de la lentille 30 et faisant avec l'axe Oy du premier réflecteur 20, un angle α important, par exemple égal ou supérieur à 30°.

Dans le mode de réalisation représenté sur la Figure 1, le deuxième réflecteur 50 est de type paraboloïde, une source lumineuse 60 étant placée au foyer F de ce paraboloïde. La source 60 peut là encore être constituée du filament d'une lampe à incandescence normalisée « H1 » ou « H7 », ou encore de l'arc électrique d'une lampe à décharge. Les rayons émis par la source 60 et réfléchis par le deuxième réflecteur 50 forment ainsi un faisceau de rayons parallèles à l'axe optique O'y'.

Un objectif 70 est placé sur le trajet des rayons lumineux réfléchis par le deuxième réflecteur 50 pour focaliser ces rayons sur un point F' de la surface focale de la lentille 30. La surface focale de la lentille 30 est le lieu géométrique des points de l'espace objet de la lentille 30 dont les images sont rejetées à l'infini dans une direction quelconque par rapport au centre optique de la lentille 30 dans l'espace image de cette lentille 30, L'intersection de cette surface focale avec un plan passant par l'axe optique de la lentille 30 est représentée par une ligne focale LF. Il en résulte donc que les rayons lumineux émergeant de l'objectif 70 et incidents sur la lentille 30 émergent de cette dernière en un faisceau de rayons parallèles à l'axe O'y'. On pourra disposer un cache 40' au voisinage immédiat de la ligne focale LF pour délimiter dans le faisceau de rayons parallèles à l'axe O'y' une coupure, par exemple au même niveau que la coupure créée par le cache 40.

La Figure 1 illustre la structure d'un projecteur implanté sur le côté gauche du véhicule. Le projecteur droit s'en déduit aisément, par symétrie par rapport à un plan vertical parallèle à l'axe Oy et passant par l'axe longitudinal du véhicule automobile.

L'utilisation du projecteur qui vient d'être décrit se comprend aisément à la lecture de ce qui précède. Lorsque le véhicule équipé des projecteurs de la présente invention circule de nuit sur une trajectoire rectiligne, seule la source lumineuse 10 du réflecteur elliptique 20 est allumée. Il en résulte que le conducteur du véhicule perçoit un faisceau d'éclairage conforme à ses habitudes et à ses attentes, les projecteurs de type elliptique étant actuellement de plus en plus répandus.

Lorsque le véhicule aborde un virage ou une partie sinueuse de la route, des capteurs (non représentés) de différents paramètres du véhicule, comme l'angle de rotation du volant ou de braquage des roues avant, la vitesse du véhicule, et/ou de l'environnement extérieur, par exemple fournis par un système de navigation, détectent l'intention du conducteur de tourner dans une direction donnée ou l'imminence d'un changement de direction. Ces capteurs commandent alors, par l'intermédiaire d'un circuit électronique de puissance (non représenté), l'allumage, progressif ou en tout ou rien, de la deuxième source lumineuse 60 si, dans l'exemple représenté, le changement de direction effectif ou prévu est à gauche.

La source lumineuse 60 émet alors des rayons lumineux tels que le rayon V représenté en tiretés sur la Figure 1, transformés en un faisceau parallèle par le réflecteur 50, puis en un faisceau convergent par l'objectif 70, puis à nouveau en un faisceau sensiblement parallèle par la lentille 30. Il en résulte l'éclairage d'une zone située largement en dehors de l'axe longitudinal du véhicule, mais dans la direction où celui-ci va se trouver dans les instants suivants.

On a donc bien réalisé un projecteur d'éclairage pour véhicule automobile, qui respecte totalement la photométrie des faisceaux de croisement et de route puisqu'il utilise les composants optiques traditionnels pour remplir ces fonctions, et qui peut éclairer des zones situées en dehors de l'axe longitudinal du véhicule, pour remplir par exemple une fonction virage, sans qu'il soit besoin de pièce mobile, et en n'utilisant qu'un miroir réflecteur supplémentaire, coopérant avec la lentille du projecteur de croisement et/ou de route.

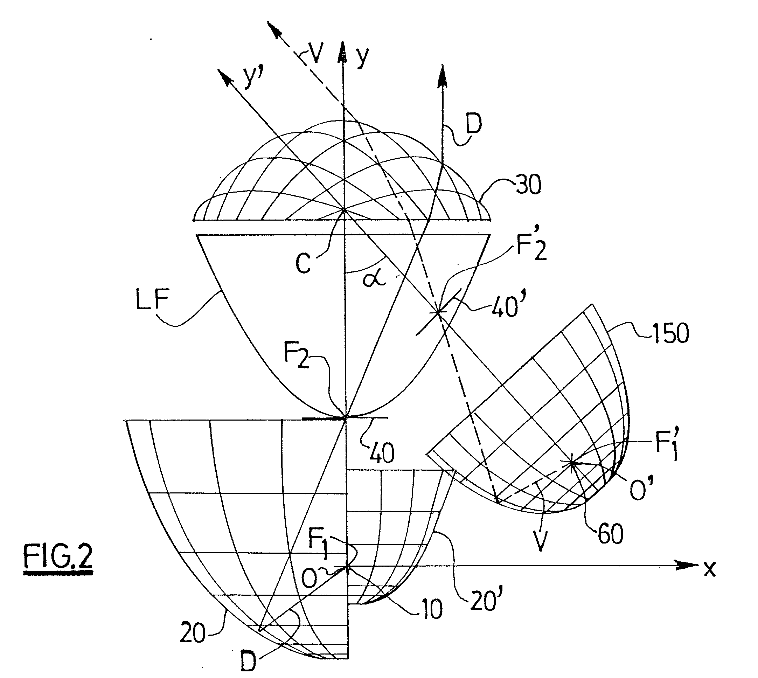

On a représenté sur la Figure 2 un deuxième mode de réalisation de la présente invention, dans lequel le deuxième réflecteur 150 est également de type elliptique, la deuxième source lumineuse 60 étant placée en un foyer F'₁ de cette surface elliptique. La source 60 peut là encore être constituée du filament d'une lampe à incandescence normalisée « H1 » ou « H7 », ou encore de l'arc électrique d'une lampe à décharge. Les rayons lumineux issus de cette source 60 et réfléchis par le deuxième réflecteur 150 sont ainsi focalisés dans une deuxième tache de concentration, située au foyer F'₂ du deuxième réflecteur elliptique 150.

Le deuxième foyer F'₂ du deuxième réflecteur 150 est situé sur la ligne focale LF de la lentille 30 ou à son voisinage immédiat, de telle sorte que les rayons lumineux issus de la source 60 et réfléchis par le deuxième réflecteur 150 passent par ce foyer F'₂ puis traversent la lentille 30 pour en émerger en formant un faisceau de rayons parallèles à l'axe O'y' passant par le centre optique C de la lentille 30. Là encore, pour ne pas alourdir la Figure 2, la marche d'un seul de ces rayons lumineux V a été représentée en tiretés sur cette Figure 2.

L'angle α entre les axes optiques Oy et O'y' sera avantageusement choisi pour qu'une proportion importante des rayons lumineux V incidents sur la face plane d'entrée de la lentille 30 pénètrent dans cette lentille, et pour que seulement une faible partie de ces rayons soit réfléchie par cette face plane.

Le projecteur selon ce deuxième mode de réalisation fonctionne exactement comme celui qui a été décrit plus haut, et ce fonctionnement ne sera pas repris en détail.

Lorsque le véhicule équipé des projecteurs représentés sur la Figure 2 circule de nuit sur une route rectiligne, seule la source lumineuse 10 du premier réflecteur elliptique 20 est allumée.

Lors d'un changement de direction du véhicule détecté par des capteurs de paramètres ou d'environnement du véhicule, l'allumage de la deuxième source lumineuse 60 est commandé. Cette dernière émet alors des rayons lumineux tels que le rayon V représenté en tiretés sur la Figure 2, pour éclairer une zone située largement en dehors de l'axe longitudinal du véhicule, mais dans la direction où celui-ci va se trouver dans les instants suivants.

De manière à rendre le projecteur conçu selon ce deuxième mode de réalisation plus compact, on peut avantageusement prévoir de réaliser l'un des réflecteurs selon une configuration en deux parties dissymétriques, de manière à en réduire l'encombrement et à permettre un rapprochement l'un vers l'autre des deux réflecteurs constituant ce projecteur.

On peut par exemple choisir de réaliser le premier réflecteur 20 en deux parties, la partie droite 20' (sur la Figure 2) du deuxième réflecteur 150 étant moins étendue dans la direction Ox que sa partie gauche, pour un projecteur destiné à être installé sur le côté gauche d'un véhicule. Une telle construction permet de rapprocher le deuxième réflecteur 150 de l'axe Oy, et de réaliser un projecteur moins encombrant. En outre, une telle configuration permet d'accéder à la courbe LF en des points plus proches de l'axe Oy, avec des angles d'incidence plus faibles sur la face plane d'entrée de la lentille, et donc d'accéder à des angles d'incidence sur cette face plane voisins de 25°, pour le faisceau de virage, avec un rendement convenable.

Le projecteur destiné à être installé sur le côté droit du véhicule aura bien sûr une configuration symétrique par rapport à un plan vertical parallèle à l'axe Oy et passant par l'axe longitudinal du véhicule automobile.

Le réflecteur du projecteur de la Figure 2 est constitué de deux moitiés d'ellipsoïdes 20 et 20'. Ces deux moitiés coopèrent avec la même source lumineuse 10 et la même lentille 30. Elles ont donc les mêmes foyers F₁ et F₂, mais des excentricités différentes. L'excentricité de la moitié d'ellipsoïde 20' est ainsi supérieure à celle de la moitié d'ellipsoïde 20. Un tel réflecteur constitué de deux demi-coquilles pourra avantageusement être réalisé selon les enseignements du document FR-A-2 735 849. Une telle conception permet alors de réaliser les demi-coquilles constituant le deuxième réflecteur 150 d'une seule pièce avec les demi-coquilles constituant le réflecteur 20'.

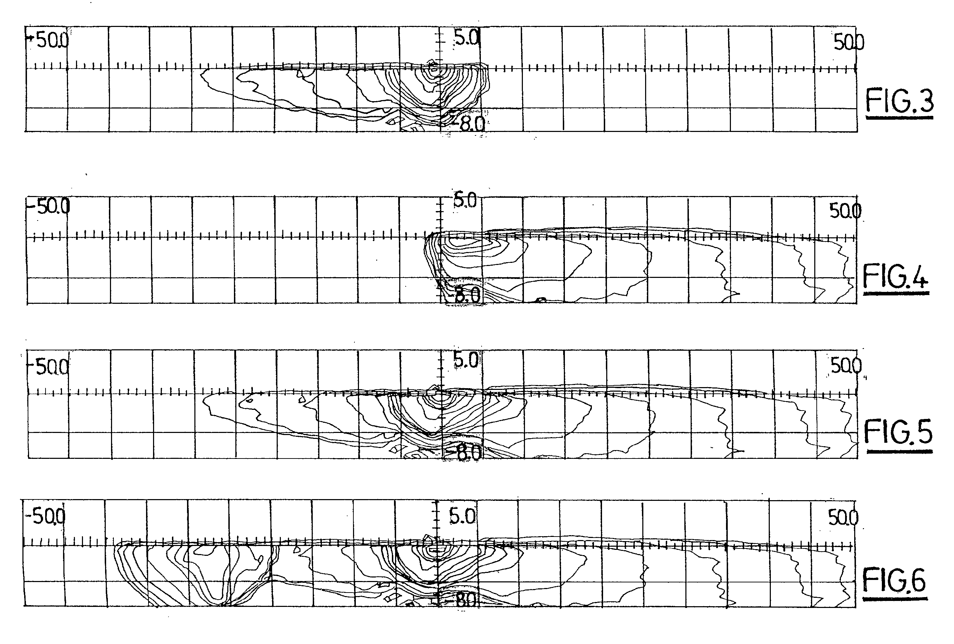

On a représenté sur les Figures 3 à 8 par des ensembles de courbes isocandela l'allure du faisceau engendré par le projecteur selon la présente invention, dans différentes conditions.

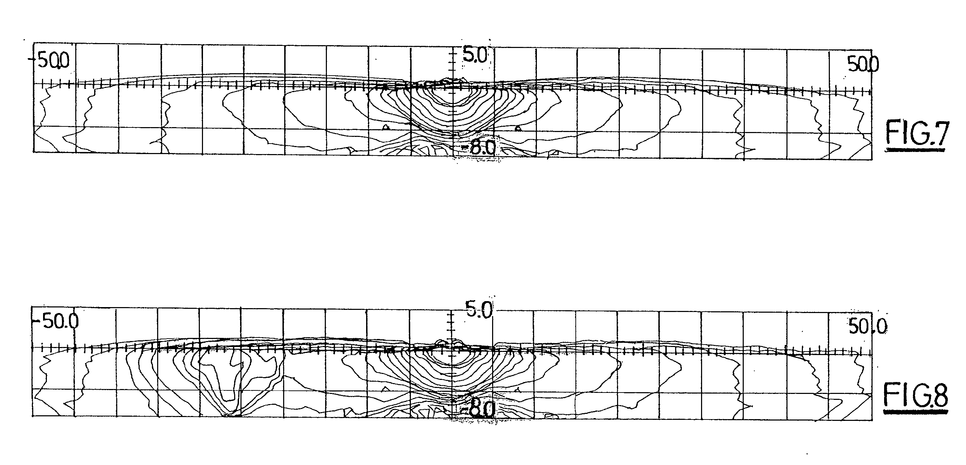

Sur la Figure 3, on a représenté le faisceau engendré par la partie droite 20' seule. Cette partie 20' contribue à former la partie gauche du faisceau lumineux. La Figure 4 représente le faisceau engendré par la partie gauche 20 seule, qui contribue à former la partie droite du faisceau lumineux. Les deux parties 20 et 20' engendrent ainsi ensemble le faisceau représenté sur la Figure 5. On constate qu'un tel faisceau possède une bonne homogénéité, une bonne concentration dans l'axe du véhicule, et qu'il est parfaitement adapté, grâce à la présence du cache 40, à constituer un faisceau de croisement pour une circulation sur une route rectiligne.

Lorsque le véhicule équipé du projecteur selon la présente invention aborde un virage ou circule dans ce virage, la source lumineuse 60 est alors allumée. Les rayons lumineux V qu'elle émet sont alors concentrés sur le deuxième foyer F'₂, situé au voisinage immédiat de la ligne focale LF de la lentille 30. La lentille 30 forme ainsi de la tache de concentration en F'₂ un faisceau de rayons parallèles selon la direction O'y', qui se superpose au faisceau de croisement de la Figure 5, pour donner le faisceau de la Figure 6.

On voit bien sur cette Figure 6 que le faisceau lumineux comporte un deuxième maximum d'intensité, faisant dans cet exemple un angle compris entre 25 et 30° par rapport à l'axe longitudinal du véhicule. Ce deuxième maximum d'intensité apporte au conducteur du véhicule une bonne visibilité des portions de la route qui vont être abordées par le véhicule.

Les Figures 3 à 6 représentent l'allure du faisceau engendré par le seul projecteur gauche du véhicule. On a représenté sur la Figure 7 l'allure du faisceau total d'éclairage, fourni par les projecteurs gauche et droit du véhicule. Comme on l'a vu plus haut, la structure du projecteur droit se déduit aisément de celle du projecteur gauche par simple symétrie par rapport à un plan vertical parallèle à l'axe Oy et passant par l'axe longitudinal du véhicule automobile.

Le faisceau engendré par les deux projecteurs du véhicule lorsque seules les deux sources lumineuses 10 sont allumées représente donc la superposition d'un faisceau tel que celui qui est représenté sur la Figure 5, et d'un faisceau symétrique par rapport à l'axe vertical central. Un tel faisceau est représenté sur la Figure 7. On voit qu'un tel faisceau possède une largeur importante, et une très bonne homogénéité, et qu'il est en tous points conforme à la réglementation.

Lorsque le véhicule équipé de deux projecteurs gauche et droit selon la présente invention aborde un virage ou circule dans ce virage, la source lumineuse 60 est alors allumée dans le projecteur situé du côté de l'intérieur de ce virage. Les rayons lumineux V qu'elle émet sont alors concentrés sur le deuxième foyer situé au voisinage immédiat de la ligne focale LF de la lentille de ce projecteur intérieur au virage. Cette lentille forme ainsi de cette tache de concentration un faisceau de rayons parallèles selon la direction O'y' dirigée vers l'intérieur du virage, qui se superpose au faisceau de croisement de la Figure 7, pour donner le faisceau de la Figure 8, dans l'exemple où le virage est à gauche.

On a donc là encore réalisé, selon ce deuxième mode de réalisation, un projecteur d'éclairage pour véhicule automobile, qui respecte totalement la photométrie des faisceaux d'éclairage, et qui peut éclairer des zones situées en dehors de l'axe longitudinal du véhicule, pour remplir par exemple une fonction virage, sans qu'il soit besoin de pièce mobile, et en n'utilisant qu'un miroir réflecteur supplémentaire, coopérant avec la lentille du projecteur d'origine.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple qu'un deuxième réflecteur supplémentaire pourra être associé au réflecteur engendrant un faisceau lumineux dans l'axe du véhicule, pour éclairer d'autres zones où on désire apporter une meilleure visibilité au conducteur. On pourra par exemple disposer un tel réflecteur supplémentaire en dessous du projecteur axial, pour éclairer des zones situées en hauteur, par exemple les portiques porteurs d'informations sur les autoroutes. L'éclairage de la source lumineuse associée à ces réflecteurs supplémentaires pourra alors être commandé par un interrupteur au tableau de bord du véhicule. De même, dans le premier mode de réalisation, le réflecteur elliptique associé à la première source lumineuse pourra également être réalisé en deux parties dissymétriques, de manière à rapprocher le réflecteur parabolique du premier réflecteur.

## Revendications

1. Projecteur pour véhicule automobile, comportant un premier réflecteur (20, 20') de forme elliptique à un premier foyer (F₁) duquel est située une source lumineuse principale (10), les rayons lumineux émis par cette source (10) et réfléchis par le réflecteur elliptique (20, 20') étant dirigés vers une tache de concentration située à un deuxième foyer (F₂) du réflecteur elliptique (20, 20'), les premier (F₁) et deuxième (F₂) foyers du réflecteur elliptique (20, 20') définissant un axe optique principal (Oy) du réflecteur elliptique (20, 20'), une lentille convergente (30) étant disposée de sorte que son axe optique soit confondu avec l'axe optique principal (Oy) du réflecteur elliptique (20, 20') et que le deuxième foyer (F₂) du réflecteur (20, 20') soit situé sur la ligne focale (LF) de la lentille (30) pour émettre un faisceau lumineux de rayons parallèles à l'axe optique principal (Oy), **caractérisé en ce que** le projecteur comporte au moins un système optique concentrant les rayons lumineux émis par une deuxième source lumineuse (60) dans la direction d'un deuxième axe optique (O'y') passant par le centre optique (C) de la lentille (30) et sur une deuxième tache de concentration située sur la ligne focale (LF) de la lentille (30), et **en ce que** les premier (Oy) et deuxième (O'y') axes optiques font entre eux un angle (α) compris entre 20 et 45°.

2. Projecteur selon la revendication 1, **caractérisé en ce que** le système optique comporte un réflecteur (50) paraboloïdal associé à un objectif (70) focalisant les rayons lumineux émis par la deuxième source lumineuse (60) et réfléchis par le deuxième réflecteur (50) sur la deuxième tache de concentration.

3. Projecteur selon la revendication 1, **caractérisé en ce que** le système optique comporte un deuxième réflecteur elliptique (150), la deuxième source lumineuse (60) étant disposée sur un premier foyer (F'₁) du deuxième réflecteur (150), le deuxième foyer (F'₂) du deuxième réflecteur (150) étant situé sur la ligne focale (LF) de la lentille (30), les foyers (F'₁, F'₂) du deuxième réflecteur (150) étant alignés sur le deuxième axe optique (O'y').

4. Projecteur selon la revendication 1, **caractérisé en ce que** le premier réflecteur (20, 20') est constitué de deux moitiés d'ellipsoïdes ayant les mêmes foyers (F₁, F₂) et des excentricités différentes.

5. Projecteur selon la revendication 4, **caractérisé en ce que** la moitié d'ellipsoïde (20') la plus proche du deuxième réflecteur (50, 150) a une excentricité supérieure à celle de la moitié d'ellipsoïde (20) la plus éloignée du deuxième réflecteur (50, 150).

6. Projecteur selon la revendication 1, **caractérisé en ce qu'**un cache (40) est disposé sur l'axe optique principal (Oy) au voisinage immédiat de la ligne focale (LF) de la lentille (30) pour délimiter une coupure dans le faisceau de rayons lumineux issus de la source lumineuse principale (10).

7. Projecteur selon la revendication 1, **caractérisé en ce qu'**un cache (40') est disposé sur le deuxième axe optique (O'y') au voisinage immédiat de la ligne focale (LF) de la lentille (30) pour délimiter une coupure dans le faisceau de rayons lumineux parallèles au deuxième axe optique (O'y')
